# EUROPÄISCHE PATENTSCHRIFT

(11) **EP 2 217 837 B1**
(45) Veröffentlichungstag und Bekanntmachung des Hinweises auf die Patenterteilung: **15.02.2012**
(21) Anmeldenummer: 08857970.1
(22) Anmeldetag: 02.12.2008
(51) Int. Cl.: F16H 63/38, F16H 59/70

(54) **Schalteinheit und Verfahren zu ihrer Herstellung**
Shift unit and method for the production thereof
Unité de commutation et procédé de fabrication de cette unité

(30) Priorität: 05.12.2007 DE 102007058298
(43) Veröffentlichungstag der Anmeldung: 18.08.2010
(73) Patentinhaber: Schaeffler Technologies GmbH & Co. KG, 91074 Herzogenaurach (DE)
(72) Erfinder: HAUBOLD, Werner, 90513 Wintersdorf (DE); KAISER, Tobias, 91358 Kunreuth (DE); MASSINI, Stanislav, 90579 Langenzenn (DE); OBERPERTINGER, Gerhard, 91325 Adelsdorf (DE)
(86) Internationale Anmeldenummer: PCT/EP2008/066616
(87) Internationale Veröffentlichungsnummer: WO 2009/071534

(56) Entgegenhaltungen:
- EP-A- 1 152 174
- WO-A-92/11479
- WO-A-2008/017520
- DE-A1- 4 307 596
- DE-A1- 4 430 922
- DE-A1- 10 105 631
- DE-A1- 19 654 004
- DE-C1- 19 509 878

## Beschreibung

### Gebiet der Erfindung

Die Erfindung betrifft eine Sensorschalteinheit zur Lagefixierung eines beweglichen Stellelements, insbesondere einer Schaltstange eines Kraftfahrzeuggetriebes sowie ein Verfahren zu deren Herstellung.

### Hintergrund der Erfindung

Die Sensorschalteinheit dient zur Bestimmung von Stellungen wenigstens eines Getriebebauteils. Sie besteht aus einer Schaltarretierung zum Arretieren von Getriebeschaltpositionen, wobei die Schaltarretierung ein Arretiergehäuse und einen Schaltbolzen aufweist und der Schaltbolzen hubbeweglich in dem Arretiergehäuse gelagert und gegen das Getriebebauteil vorspannbar ist. Ferner weist die Sensorschalteinheit eine Sensorik mit einem Signalgeber als erstem Sensorikelement, mit einem Sensor als zweiten Sensorikelement und ein Gehäuse mit einer Aufnahme für die Schaltarretierung auf.

Bei vielen derartigen Sensorschalteinheiten weist der Schaltbolzen an seiner Stirnseite ein geführtes Rastelement auf. Es ist vorzugsweise kugelförmig ausgebildet und greift in eine Ablaufbahn des Stellelements ein. Derartige Schaltarretierungen, die auch als Kugelrasten bezeichnet werden, finden insbesondere in Kraftfahrzeuggetrieben Anwendung, wobei die Rastelemente der Schaltarretierungen in entsprechende Ausnehmungen der Schaltstangen oder Rastausnehmungen der Schaltelemente eingreifen.

DE 101 05 631 zeigt einen Rastierschalter mit einer Arretiervorrichtung und einem elektrischen Schalter. Die Arretiervorrichtung hat einen Arretierungsbolzen, welcher über eine Feder gegen ein außenliegendes Rastiersegment vorgespannt ist. An dem Arretierbolzen ist ein Stößel angebracht, welcher über eine öldichte Membran in mechanischem Kontakt mit einem Schalter steht. Erfährt der Arretierbolzen eine Höhenänderung stellt der Stößel durch die Membran einen elektrischen Kontakt her. Somit sind lediglich zwei Zustände des Rastierschalters elektronisch ermittelbar.

Die gattungsgemäße EP 1 152 174 A2 zeigt eine Schalteinheit mit einer Schaltarretierung, die gegen eine Welle vorgespannt ist, wobei die Schaltarretierung mit ihrem Rastelement in die Welle eingebrachte Nuten eingreift. Die Schaltarretierung ist vergleichsweise massiv und weist seitlich ein Gewinde auf, über das sie mit dem Getriebegehäuse verschraubt werden kann. Das Gehäuse ist ebenfalls massiv und baut relativ lang. Zudem ist es erforderlich, die Sensorik des Rastelements zu kalibrieren, nachdem die Schaltarretierung verschraubt ist.

### Aufgabe der Erfindung

Die Aufgabe der Erfindung ist es daher, eine Sensorschalteinheit zu schaffen, welche kostengünstig, Gewicht sparend und unaufwändig herstellbar ist. Weiterhin ist es Aufgabe der Erfindung, ein Verfahren zur Montage zu schaffen, bei dem die Arretiervorrichtung in möglichst einfacher Weise einsatzfertig verbaut werden kann.

Erfindungsgemäß wird die erste Teilaufgabe gemäß Anspruch 1 gelöst. Ein Sensorikelement der Sensorschalteinheit ist an dem Schaltbolzen oder an einem mit dem Schaltbolzen in Wirkverbindung stehenden Bauteil angeordnet. Das andere, komplementäre Sensorikelement ist an dem Gehäuse angeordnet, wobei die Schaltarretierung mit ihrem Arretiergehäuse in der Aufnahme des Gehäuses verpresst ist. Die Aufnahme und das Arretiergehäuse sind so ausgebildet, dass das Arretiergehäuse in der Aufnahme bei unterschiedlichen Einpresstiefen sicher gehalten ist. Es ist damit beispielsweise möglich, Fertigungstoleranzen zu kompensieren oder aber den Abstand zwischen erstem und zweiten Sensorikelement zu variieren, um in den optimalen Arbeitsbereich des Sensor-Signalgeber-Paares zu gelangen. Eine zusätzliche Vorspannung bzw. Vormagnetisierung kann entfallen.

Weiterhin ermöglicht die Erfindung damit ein Eichen der Sensorik bereits während der Montage. Die Schaltarretierung ist separat vom Gehäuse hergestellt und mit diesem form- und/oder kraftschlüssig verbindbar. Ein aufwändiges Zupaaren verschiedener Gehäuse und Schaltarretierungen kann somit entfallen. In einer ersten Ausführungsform sind das Arretiergehäuse und die Aufnahme kreiszylindrisch ausgebildet, wobei der Innendurchmesser der Aufnahme ein wenig kleiner ist als der Außendurchmesser des Arretiergehäuses. Dabei können sich die Aufnahme und/oder das Arretiergehäuse minimal verformen, so dass ein sicherer Halt gewährleistet ist.

Die Schaltarretierung besitzt in einer Ausführungsform ein geschlossenes Arretiergehäuse, so dass zum einen keine einzelnen Bauteile verloren oder dejustiert werden können. Dies vereinfacht die Handhabung, den Transport und die Montage. Zum anderen ist die Schaltarretierung dadurch gut gegen das Eindringen von Verunreinigungen geschützt.

Zumindest ein Sensorikelement dient als Signalgeber. Der Signalgeber gibt permanent oder temporär Signale konstanter oder wechselnder Folge ab, die geeignet sind durch einen oder mehrere zum Signalgeber bzw. zur Signalquelle angeordneten Sensoren als zweite Sensorikelemente erfasst zu werden. Der Signalgeber gibt zum Beispiel Lichtsignale, Schallwellen oder magnetische Impulse ab. Beispiele für permanente Signalgeber sind Dauermagneten, z.B. mit einander abwechselnder oder entgegen gerichteter Polarisation. In einer Ausführungsart der Erfindung erfolgt die Signalübertragung vom Signalgeber zum Sensor berührungslos. Darunter wird das kontaktlose Erfassen der von einem oder mehreren Signalgebern abgehenden Signale durch einen oder mehrere Sensoren verstanden, wobei die Sensoren vom Signalgeber beispielsweise durch einen Gas- oder Flüssigkeitsspalt von diesem getrennt sind.

Der Arretierbolzen ist federnd gegen die Ablaufbahn vorgespannt. Die Ablaufbahn ist durch Positionsdaten von Wähl- und Schaltstellungen und durch Positionsdaten der Kontur der Ablaufbahn zwischen diesen Wähl- und Schaltstellungen beschrieben. Die Kontur der Ablaufbahn weist Gefälle, Steigungen, Vertiefungen, Peaks, Plateaus usw. auf, die sich durch die Positionsdaten beschreiben lassen. Konkreten Stellungen des Getriebebauteils, Neutralstellungen, Wähl- und Schaltstellungen, sind charakteristische Positionsdaten zugeordnet. Konkrete Stellungen sind zum Beispiel die Neutralstellungen "normal" und eventuell weitere Neutralstellungen zur Abbildung von Referenzwerten sowie die Stellungen der Vorwärtsgänge oder des Rückwärtsgangs. Einzelne konkrete Schaltstellungen weisen in der Regel jeweils die gleichen wiederholbaren charakteristischen Positionsdaten, alternativ auch wechselnde Positionsdaten, auf.

Die charakteristischen Positionsdaten sind nach einem bestimmten Schema durch eine Kette dazwischen aneinander gereihter Positionsdaten miteinander verbunden, die den Weg für die Abtasteinrichtung auf der Ablaufbahn von einer der Stellungen zur anderen definieren. Das Schema ist durch eine zwei- oder dreidimensionale Struktur aus Vertiefungen und Erhöhungen an der Oberfläche der Ablaufbahn vorgegeben. Die verschiedenen Vertiefungen und Erhöhungen an der Oberfläche der Ablaufbahnen sind rampenartig aufsteigend oder abfallend miteinander zu einer Rampenkontur verbunden, die zu der Kette von beliebig vielen nebeneinander angeordneten und übergangslos miteinander verbundenen Positionsdaten aneinander gereiht sind. Die Positionsdaten sind somit in der einfachen Form ein- bzw. zweidimensionale Koordinaten oder Strecken, die Höhenunterschiede der Oberfläche zu definierten Bezugsebenen oder Bezugslinien der Ablaufbahn wiedergeben, auf die der Schaltbolzen mit entsprechenden Längshüben reagiert.

Die Sensorik ist auf mindestens einen Referenzwert eingestellt. Dieser Referenzwert ist eine "Nullstellung", in der der Signalgeber an dem Schaltbolzen in einer definierten Stellung zum Sensor steht. Diese Stellung liefert einen Referenzwert für die Messung der Positionsdaten. Die Referenzstellung ist beispielsweise die Neutralstellung oder eine Stellung zwischen zwei benachbarten Gängen, der eine Referenzlage des Impulsgebers zum Sensor zugeordnet ist.

Wenn der Schaltbolzen von dieser Referenzposition weg auf der Ablaufbahn entlang fährt, wird er sich dieser aufgrund der Höhenunterschiede vom Referenzwert um bestimmte Hübe entfernen oder sich schließlich diesem um bestimmte Hübe wieder nähern. Die mit dem Schaltbolzen gekoppelten Signalgeber werden somit von der Referenzlage abweichende Positionen zu den Sensoren einnehmen.

Jeder der Stellungen des Getriebebauteils ist somit ein bestimmter Hub des Schaltbolzens zugeordnet. Dem jeweiligen Hub des Schaltbolzens ist eine Lage eines oder mehrerer Signalgeber zum Sensor zugeordnet. Ausgehend von der Referenzlage, die die Signalgeber bei Referenzstellung des Schaltbolzens eingenommen haben, sind diese je nach Stellung des Getriebebauteils im Vergleich zur Referenzlage gleich dicht bzw. dichter an dem Sensor oder weiter weg von diesem. Denkbar ist auch, dass jeder charakteristischen Stellung ein anderer Sensor bzw. ein anderer Signalgebergleicher in gleicher oder anderer Ausführung zum vorherigen zugeordnet ist.

Den vorausgehenden Ausführungen folgend, ist somit jeder der Wähl- oder Schaltstellung des Getriebebauteils ein bestimmter Längshub des Schaltbolzens zugeordnet. Das dem Hub entsprechende Signal wird mit der Sensorik und Auswerteelektronik in eine Information über die Stellung des Getriebebauteils umgewandelt. Das Signal wird beispielsweise an die Bordelektronik zur Regelung von Betriebs- und Fahrzuständen weitergeleitet oder in einem Display als Wähl- bzw. Gangstellung angezeigt.

Jeder Wähl- oder Schaltstellung ist ein bestimmtes Höhenniveau der Rampenkontur der Ablaufbahn zugeordnet. Im einfachen Fall ist jeder der Stellungen eine andere Höhe zugeordnet, so dass jeder der unterschiedlichen Wähl- oder Schaltstellung ein anderer Hub des Schaltbolzens und somit das Signal aus einer anderen Lage des Impulsgebers zum Sensor zugeordnet ist.

Alternativ oder gleichzeitig dazu ist jeder Wähl- oder Schaltstellung eine definierte Reihenfolge von Positionsdaten zugeordnet, die der Schaltbolzen beim Wechsel von einem zum anderen Gang auf vorbestimmten Weg immer auf der Ablaufbahn zurücklegt. In diesem Fall kann das Höhenniveau der Rampenkontur und damit der Hub für mehrere Wähl- oder Schaltstellungen eines Getriebes sogar gleich sein. Die tatsächliche Stellung des Getriebebauteils wird dann nicht nur dem Hub zugeordnet, sondern einer definierten Menge von reproduzierbaren Positionsdaten, die in wiederholbarer und definierter Reihenfolge von dem Schaltbolzen beim Wechsel zu der jeweiligen Stellung zwangsläufig durchfahren werden müssen und die durch die Sensorik entsprechend aufgenommen und ausgewertet werden.

Vertiefungen an der Oberfläche der Ablaufbahn sind auch als Rastvertiefungen ausgebildet, in die der Schaltbolzen der Abtasteinheit mit der Spitze einrastet und beispielsweise das Getriebebauteil in den Schaltstellungen arretiert. Diesen Raststellungen ist ebenfalls ein entsprechender Hub bzw. einer definierte Messmenge von Positionsdaten zugeordnet.

Positionsdaten sind unterschiedliche Durchmesser oder Radialhübe umfangseitig verlaufender Laufbahnen, die radial abgetastet werden und die somit in radial gerichteten Längshüben des Schaltbolzens resultieren. Außerdem geben bestimmte reproduzierbare Reihenfolgen, mit denen Positionsdaten abgetastet bzw. erfasst werden, die Dreh- bzw. Schwenkrichtung bzw. die Änderung der Dreh- und Schwenkrichtung wieder. Der Veränderung der Durchmesser oder Radialtiefen ist in diesem Fall einer Veränderung des Schwenkwinkels des Getriebebauteils zugeordnet. Die Ablaufbahn verläuft in Umfangsrichtung auf einer Umfangslinie. Die Änderung der Positionsdaten wird durch Änderung der Durchmesser oder des radialen Abstands zur Rotationsachse oder zur Schwenkachse des Getriebebauteils in dieser einen Ebene erfasst. Der Schaltbolzen ist radial in Richtung der Rotations- bzw. Schwenkachse hubbeweglich und alternativ senkrecht zur Längsachse eines längsbeweglichen Getriebebauteils gerichtet. Die relative axiale Position des Schaltbolzens zur Ablaufbahn ist fix.

Positionsdaten sind, gleichzeitig oder alternativ zu vorgenannter Variante, die Tiefen und Höhen von axialen Vertiefungen und Erhöhungen in unterschiedlichen Ebenen einer axial oder in Längsrichtung abgetasteten und somit in axiale Richtung unebenen Ablaufbahn. Der Schaltbolzen ist in diesem Fall axial und somit mit der Rotations-, Schwenk bzw. Längsachse gleich ausgerichtet hubbeweglich. Der relative radiale Abstand des Schaltbolzens zur Rotations-, Schwenkachse bzw. Längsachse ist konstant. Änderungen der Positionsdaten werden durch Änderung des axialen Hubs des Schaltbolzens signalisiert. Positionsdaten, unterschiedliche axiale Abstände oder Axialtiefen der Ablaufbahn, werden in axialer Richtung von der Abtasteinrichtung abgetastet und resultieren in unterschiedlichen Längshüben des Schaltbolzens. Der Schaltbolzen kann gleichzeitig bei Abtastung einer Ablaufbahn oder unabhängig davon zur Messung von Verschiebungen des Getriebebauteils in seine Längsrichtungen eingesetzt werden.

Positionsdaten sind alternativ, oder gleichzeitig zu vorgenannten Varianten, die Durchmesser oder Radialabstände beliebiger Mengen von axial zueinander benachbarten Umfangslinien, die in axialer Reihenfolge nacheinander abgetastet werden. Die Ablaufbahn verläuft in diesem Fall in Längsrichtung - also senkrecht zur Radialrichtung. Dabei ist entweder der Schaltbolzen in einer axial fixen Position zum axialbewegliche Getriebebauteil oder der Schaltbolzen ist axial beweglich zum axial fixen bzw. axial beweglichen Getriebebauteil. Der Schaltbolzen ist radial zur Rotations- bzw. Schwenkachse bzw. senkrecht zur Längsachse ausgerichtet und der Hub des Bolzens ist somit radial.

Positionsdaten sind auch alle möglichen Kombinationen der vorhergehenden Ausgestaltungen der Erfindung. Denkbar ist der Einsatz von Schaltbolzen, die zur Rotationsachse oder Schwenkachse geneigte Hübe ausführen. Denkbar ist auch, dass die Abtasteinrichtungen mit Schaltbolzen nicht relativ axial oder radial fixiert sind, sondern dass diese unabhängig vom Hub in axiale und oder radiale Richtung beweglich angeordnet sind und eine Ablaufbahn entlang eines schwenkenden oder rotierenden und oder axialbeweglichen Getriebebauteils abtasten. Denkbar ist auch der Einsatz von mehreren gleichgerichteten oder gleichbeweglichen bzw. in unterschiedliche Richtungen gerichteten oder unterschiedlich beweglichen Abtasteinrichtungen in einer Schaltvorrichtung.

Die Ablaufbahnen sind vorzugsweise mit spanlosen Formgebungsverfahren, insbesondere durch Kaltumformen in Bleche oder in das Getriebebauteil bzw. in Bauteile, die mit dem Getriebebauteil synchronbeweglich gekoppelt sind, eingebracht. Denkbar ist auch die Ausbildung von Rast- und oder Kulissenkonturen durch spanabhebende Verfahren.

Der Schaltbolzen ist längsbeweglich in dem Arretiergehäuse gelagert. Wenigstens eine Feder ist in die gleiche Längsrichtung in dem oder in einem weiteren Arretiergehäuse abgestützt und spannt zumindest bei Betrieb der Abtasteinrichtung den Bolzen gegen die Ablaufbahn. Der Schaltbolzen ist beispielsweise innen hohl und führt einen Teil der in diesem Fall als Druckfeder ausgebildeten Feder. Alternativ ist der Ablaufbolzen aus Vollmaterial und wird außen zum Beispiel durch eine Spiralfeder teilweise umgriffen. Die Spitze des Schaltbolzens ist für den Kontakt mit der Ablaufbahn verrundet oder mit einer Kugel versehen. Die in einer Kalotte ums eigene Zentrum rotierbar aufgenommene Kugel ist wahlweise in der Kalotte kugelgelagert.

Die Sensorik weist mindestens einen Träger für den Signalgeber und zumindest einen Sensor auf. Der Träger ist zumindest dann durch den Schaltbolzen aktivierbar, wenn die Positionsdaten erfasst werden sollen und ist vorzugsweise eine als Schaft ausgebildete Stange. Der Träger ist vorzugsweise koaxial mit dem Schaltbolzen in die gleiche Längsrichtung in dem Arretiergehäuse gelagert, in dem auch der Schaltbolzen längsbeweglich ist. In einer anderen Ausführungsform übernimmt der Schaltbolzen selbst die Funktion des Trägers, so dass dieser und der Schaltbolzen einteilig ausgebildet sind. Zwischen dem Schaltbolzen und dem Träger besteht entweder permanent oder zeitweise in Längsrichtung Kontakt. Alternativ ist zwischen Schaltbolzen und Träger eine Übertragungseinrichtung für permanenten oder bedarfsweise Verbindung angeordnet. Der Träger ist entweder an dem Schaltbolzen befestigt oder an diesem geführt oder liegt durch Wirkung einer Feder an diesem an.

Der Schaltbolzen ist wahlweise in dem Arretiergehäuse gleit- oder wälzgelagert. Eine oder mehrere Federn sind Schraubenfedern und/oder Tellerfedern pro Sensorschalteinheit. Mit der Erfindung ist eine Einrichtung zu Mehrbereichsmessung von Schalt- und Wählstellungen geschaffen, die sich einfach, robust und kostengünstig herstellen lässt. Der Schaltbolzen ist in einer Ausgestaltung der Erfindung an den Innenflächen der Schaltarretierung axial verschieblich angeordnet, und eine Druckfeder stützt sich am Schaltbolzen und am Arretiergehäuse ab. Die Schaltkraft der Schaltarretierung wird insbesondere durch die Kraft der Druckfeder bestimmt, die zwischen dem Schaltbolzen und dem Arretiergehäuse eingesetzt ist. Ein vorzugsweise kugelförmiges Rastelement greift in eine Ausnehmung des Stellelements ein und ist an der Stirnseite des Schaltbolzens geführt. Der Boden des Arretiergehäuses weist eine Ausnehmung auf, durch welche der schaftartige Träger geführt ist. Der Schaft ist teilweise im Arretiergehäuse angeordnet und verläuft dort parallel innerhelb der Druckfeder und stützt sich endseitig am Schaltbolzen ab. Außerhalb des Gehäuses weist der Schaft einen Aufnahmeabschnitt für den Sensor oder den Signalgeber auf.

Zur Erreichung einer Verliersicherung im nicht eingebauten Zustand der Schaltarretierung, bzw. zur Erreichung einer Stellwegbegrenzung des Rastbolzens im eingebauten Zustand kann die Schaltarretierung mit einer axialen Sicherung versehen sein.

Die Sensorik kann aus einem oder mehreren ersten Sensorelementen, also Signalgebern, und einem oder mehren zweiten Sensorelementen, Sensoren, bestehen. Optional ist in die Sensorik eine Außenschnittstelle und wahlweise eine Auswerteelektronik integriert. Eine spezielle Ausgestaltung der Erfindung sieht eine Sensorik vor, in der magnetische Mittel eingesetzt sind. Die Erfassung bzw. Auswertung der Informationen ist in diesem Fall vorzugsweise mit einem oder mehreren Hallsensoren vorgesehen. Magnetische Mittel sind Dauermagnete oder temporäre Erreger wie Spulen. Es sind dazu unter anderem folgende Anordnungen vorgesehen:
- Ein Sensor oder mehrere werden mit einem Magnetfeld eines oder mehrerer magnetischer Signalgeber beaufschlagt. Das Magnetfeld bestimmter Stärke wird von einem oder mehr Magneten hervorgerufen, der/die an dem Träger befestigt sind. Der Träger trägt die Magnete an vorbestimmten Stellen. Die vorbestimmten Stellen entsprechen den zu signalisierenden Schalt- oder Wählstellungen bei einem bestimmten Hub des Schaltbolzens. Die auf den Sensor wirkende Magnetfeldstärke der Magnete nimmt gerichtet in eine Richtung zu, wenn sich der vorgesehene Hub ausgeführt wird. Der jeweilige Sensor reagiert entweder erst, wenn die Feldstärke einen Wert erreicht hat, der der maximalen Feldstärke oder mehr entspricht, die das Magnetfeld aufweist wenn der Signalgeberund der Sensor bei erreichen des vorgesehenen Hubs zueinander ausgerichtet sind und schaltet ab, wenn diese Stellung verlassen wird. Alternativ erfasst er das Magnetfeld auch schon bei Einleitung des Hubs und somit ein Magnetfeld mit Feldstärke, die solange zu oder abnimmt bis der Signalgeber und der Sensor in vorbestimmter Stellung zueinander ausgerichtet sind.
- Ein oder mehrere Sensoren werden mit einem Magnetfeld beaufschlagt, das durch einen oder mehrere ferromagnetische Signalgeber geschwächt ist.
- Ein oder mehrere ferromagnetische Signalgeber sind an dem Träger fest oder der Träger ist zumindest partiell selbst aus ferromagnetischen Material und weist an Stellen, die charakteristischen Hüben entsprechen, Strukturerhebungen und/oder -Vertiefungen wie Vorsprünge oder Vertiefungen auf.
- Ein oder mehrere Magnete sind mit einem festgelegten unveränderlichen Abstand zu einem oder mehren Sensoren in einer Einheit in der Nähe des beweglichen Trägers angeordnet. Die Stellen, an denen das ferromagnetische Material am Träger befestigt ist oder die Stellen des ferromagnetischen Trägers die durch die vorgenannten Strukturerhebungen und/oder -Vertiefungen unterbrochen sind, entsprechen Schalt- oder Wählpositionen. Durch die Bewegungen des ferromagnetischen Materials und der Strukturerhebungen/Vertiefungen bei Hüben in die Feldlinien des Magneten werden definierte Schwächungen des betreffenden Magnetfeldes hervorgerufen und vom Sensor erfasst.

Ein oder mehrere Magnete sind in der Sensorik mit einem festgelegten unveränderlichen Abstand zu einem oder mehreren Sensoren so angeordnet, dass die Feldstärke durch die Sensoren erfasst wird. Der oder die Magnete sind gleichzeitig auch mit einem festgelegten Abstand zu dem Träger aber nicht an dem Träger so angeordnet, dass die Signalgeber am Träger bei Hubbewegungen des Abtastelements das jeweilige Magnetfeld schneiden oder in dessen Einfluss bewegt werden. Die Signalgeber sind Strukturerhebungen und/oder - Vertiefungen (Schlitze oder Erhebungen) an der Oberfläche des nicht ferromagnetischen Trägers. Die Lage der Strukturerhebungen und/oder - Vertiefungen ist durch charakteristische Wähl- oder Schaltstellungen bestimmt. Die durch die Schlitze oder Erhebungen hervorgerufenen Änderungen des Magnetfeldes werden vom Sensor erfasst.

Strukturerhebungen und/oder -Vertiefungen wie Schlitze, insbesondere Durchgangsschlitze oder Löcher bzw. Erhebungen an dem Träger sind auch für fotoelektronische Sensorik vorgesehen.

Der Träger ist je nach Anwendung aus ferromagnetischen oder nicht ferromagnetischen Metallen oder Nichtmetallen. Die Verwendung von Kunststoff für den Träger und auch für das Gehäuse der Sensorik ist vorgesehen. Der Kunststoff des Trägers und auch des Gehäuses kann dabei zumindest partiell mit magnetisierbaren Partikeln durchsetzt sein, die nach verschiedensten Mustern magnetisiert sind.

Das Gehäuse ist auf das Arretiergehäuse auf- oder eingepresst. Es nimmt wahlweise weitere Auswerteelektronik, Energieversorgung, Verbindungsleitungen und Steckelemente auf. Das Gehäuse und/oder das Arretiergehäuse können auch mit Dichtelementen versehen sein.

Das Arretiergehäuse einer Variante der Erfindung ist aus Blech ausgebildet und weist zumindest drei Abschnitte auf. Der dritte Abschnitt ist zylindrisch ausgebildet, und in seinem Inneren ist der Schaltbolzen angeordnet. Vorzugsweise weist der dritte Abschnitt an seinem Ende eine Umbördelung auf, so dass der Schaltbolzen verliergesichert ist. Der zweite Abschnitt, der sich unmittelbar an den dritten Abschnitt anschließt, ist als Dopplung ausgebildet. Die Dopplung besitzt einen größeren Radius als der Hohlzylinder des ersten Abschnitts. Die Dopplung ist dabei so ausgebildet, dass die Schaltarretierung mittels eines Werkzeugs, das in Axialrichtung auf die Dopplung Druck- oder Zugkräfte ausübt, verpressbar ist. Der erste Abschnitt schließt sich unmittelbar an den zweiten Abschnitt an und ist wiederum hohlzylindrisch oder leicht konisch ausgebildet. In ihm ist der Schaft geführt. Endseitig bildet der Abschnitt einen kreisförmigen Boden, der in seiner Mitte eine Ausnehmung für den Schaft aufweist.

In einer vorteilhaften Weiterbildung der Erfindung ist in der Aufnahme des Gehäuses eine Hülse angeordnet. Im verbauten Zustand ist die Schaltarretierung formschlüssig über die Hülse mit dem Gehäuse, das vorzugsweise ebenfalls aus Kunststoff ausgebildet ist, verbunden. Es hat sich als besonders geeignet herausgestellt, die Hülse aus Blech auszubilden oder aus einem dehnbaren Kunststoff. Die Hülse ist dabei so ausgebildet, dass sie die Schaltarretierung bei unterschiedlichen Einpresstiefen T sicher halten kann. In radialer Richtung wird dabei ein Formschluss realisiert. In axialer Richtung verbleibt ein Raum. Die mittlere Einpresstiefe E ist daher geringer als die maximal mögliche Einpresstiefe Tₘₐₓ. Durch die unterschiedlichen Einpresstiefen können Fertigungsungenauigkeiten und Streuungen in der Stärke der Signalgeber kompensiert werden.

In einer weiteren Ausführungsform ist der erste Abschnitt der Schaltarretierung leicht konisch ausgebildet, wodurch eine bessere Einführbarkeit in die Hülse gewährleistet ist.

Um einen besonders festen Sitz zu ermöglichen ist es vorteilhaft, dass der Außendurchmesser der Schaltarretierung geringfügig größer ist als der Innendurchmesser der diese aufnehmenden Aufnahme. Es ist nicht erforderlich, dass die Hülse, die Aufnahme und die Schaltarretierung jeweils einen zylindrischen Durchmesser besitzen. Sie können im Querschnitt auch von der Kreisform abweichend ausgebildet sein, was gleichzeitig eine Verdrehsicherung bildet, wodurch bei unsymmetrisch geformten Sensorschalteinheiten eine Fehlmontage vermieden wird.

Weiterhin betrifft die Erfindung ein Verfahren zur Herstellung der vorgestellten Sensorschalteinheit. Das Verfahren beruht auf dem Verpressen einer Schaltarretierung in eine Aufnahme eines Gehäuses, wobei das eine Bauteil einen Signalgeber und das andere einen Sensor zum Detektieren eines Signals des Signalgebers aufweist, wobei durch den Signalgeber in dem Sensor ein Signal in Abhängigkeit von Position und/oder Geschwindigkeit der Schaltarretierung erzeugbar ist. Es ist gemäß Anspruch 10 dadurch gekennzeichnet, dass während des Verpressens ein Kalibrieren erfolgt, indem das durch den Signalgeber in Sensor erzeugte Signal während des Verpressens ausgewertet wird und der Verpressvorgang aufgrund einer Auswertung des Signals gesteuert oder geregelt wird.

Mittels dieses Verfahrens ist es möglich, Fertigungsungenauigkeiten auszugleichen bei gleichzeitiger Kalibrierung der Sensorik. Zudem ist eine genaue Kenntnis und ein Zupaaren von passenden Magneten oder anderen Sensorikelementen für die Sensorschalteinheit entbehrlich. Für einen festen Sitz der erfindungsgemäßen Schaltarretierung in dem Gehäuse spielt es innerhalb eines bestimmten, mittleren Bereichs keine Rolle, wie weit die Schaltarretierung in das Gehäuse verpresst wird. Erfindungsgemäß wird daher vorgeschlagen, die Einpresstiefe von Sensorschalteinheit zu Sensorschalteinheit zu variieren, um mittels dieser Variation die Sensorschalteinheit zu eichen. In vorteilhafter Weise kann somit ein nachträgliches, elektronisches Kalibrieren mit externen Bauelementen, Gerätschaften oder durch Anpassung von Software entfallen. Weiterhin ist keine nachgeschaltete, externe Auswerteelektronik erforderlich, die eine Anpassung der Nulllage des Sensors aufgrund der stets vorhandenen Fertigungsungenauigkeiten vornimmt.

Dadurch dass der bisher nachgeschaltete Verfahrensschritt des Kalibrierens entfallen und auch die Kosten für aufwändige Elektronik ebenfalls entfallen können, die bei einer Referenzlage einen bestimmten Ausgangswert liefert, wird eine erhebliche Vereinfachung und Kosteneinsparung realisiert. Durch den Verzicht der signaländernden Elektronik im potentiell warmen Getriebe steigt auch die Zuverlässigkeit der Sensorschalteinrichtung.

Ferner werden die Ungenauigkeiten beim Herstellungsprozess der Einzelteile erfindungsgemäß dadurch kompensiert, dass die jeweilige Einpresstiefe T variiert wird. Besonders vorteilhaft ist es, wenn die Standardabweichung T-E klein gegenüber der durchschnittlichen Einpresstiefe E ausfällt, da dann auch größere Sortierungstolerenzen bei den verwendeten Sensorikelementen ermöglicht werden.

Vorzugsweise wird vor dem Verpressen der Arretierbolzen auf einen definierten Schalthub vorgespannt. Im vorgespannten Zustand wird die Arretierung dann in die Sensoreinheit so weit eingepresst, bis der Sensor ein Signal registriert. Durch die elektrischen Kontakte der Sensorschalteinheit kann das Signal abgegriffen und somit von außen erforderlichenfalls kontrolliert werden.

In einer vorteilhaften Weiterbildung der Erfindung wird das Verpressen beendet, sobald ein bestimmter Schwellwert erreicht wird. Dieser Schwellwert kann beispielsweise darin bestehen, dass überhaupt eine Signaländerung registriert wird. Optimalerweise wird allerdings soweit verpresst, bis die Sensorik in einem Bereich kalibriert ist, in dem auch sehr kleine Änderungen des Schalthubs eine möglichst große Signaländerung bewirken.

In einer bevorzugten Ausführungsform ist der Signalgeber als ein Magnet ausgebildet und der Sensor ein Hall-Sensor. Es sind auch andere Signalgeber und Sensoren als Signaldetektoren denkbar. So kann es sich bei dem Sensor um einen Drucksensor, um einen Helligkeitssensor oder um einen anderen berührungsfreien oder berührungsgebundenen Sensor handeln.

Für die Anwendung des Verfahrens ist es besonders vorteilhaft, wenn das Arretierelement eine Angriffsfläche für ein Presswerkzeug aufweist. Hierzu ist ein Verfahren gemäß Anspruch 14 besonders geeignet. Das Arretiergehäuse besteht aus Blech und ist in Druckrichtung gesehen rotationssymmetrisch ausgebildet. An den Arretierboden schließt sich ein erster zylindrischer Abschnitt an, dann ein zweiter Abschnitt, der als Dopplung ausgebildet ist, und ein dritter Abschnitt, der wiederum zylindrisch ausgebildet ist. Es wird allein der erste Abschnitt verpresst. Der zweite Abschnitt bildet einen umlaufenden Rand. Dieser Rand dient als Angriffsfläche für ein Presswerkzeug.

In einer Weiterbildung der Erfindung wird vor dem Verpressen in das Gehäuse eine Hülse eingebracht. Die Hülse ist aus Kunststoff oder aus Blech ausgebildet und kann somit leicht verformt werden. Der Innendurchmesser ist auf dem Außendurchmesser der Schaltarretierung abgestimmt, so dass eine Übermaßpassung vorliegt. Beim Verpressen entsteht dann zwischen Schaltarretierung, Hülse und Gehäuse eine kraftschlüssige Verbindung.

In einer weiteren Variante wird nach dem Verpressen die Schaltarretierung in dem Gehäuse durch zusätzliche Sicherungsmittel fixiert.

### Kurze Beschreibung der Zeichnung

Im folgenden wird die Erfindung anhand von Figuren näher erläutert. Es zeigen:
- Figur 1: eine Sensorschalteinheit,
- Figur 2: ein Gehäuse der Sensorschalteinheit nach Figur 1,
- Figur 3: eine Schaltarretierung der Sensorschalteinheit nach Figur 1.

### Ausführliche Beschreibung der Zeichnungen

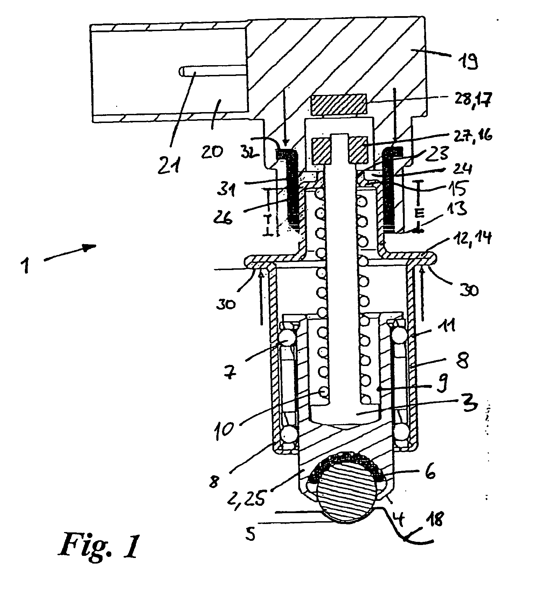

In Figur 1 ist eine Sensorschalteinheit 1 im Vollschnitt abgebildet. Die Sensorschalteinheit 1 besteht aus einer Schaltarretierung 25 und einem Gehäuse 19. Die Schaltarretierung weist einen Schaltbolzen 2 aus Metall mit einer Kalotte 4 und einen als Schaft 3 ausgebildeten Träger auf. Endseitig nach außen weisend ist am Schaltbolzen 2 eine Kugel 5 angeordnet, die mittels weiterer Wälzkugeln 6 in der Kalotte 4 wälzgelagert ist. Die Kugel 5 ist gegen eine Ablaufbahn 18 vorspannbar. Das Gehäuse 19 ist mit dem Arretiergehäuse 8 verpresst. Eine separate Dichtung kann daher entfallen.

Der Schaltbolzen 2 ist mittels eines Wälzlagers 7 in dem Arretiergehäuse 8 aus Metall hubbeweglich gelagert und geführt. Der Schaltbolzen 2 ist mit einer sacklochartigen Bohrung 9, die nicht notwendigerweise kreisförmig im Querschnitt zu sein braucht, versehen, in dem eine Feder 10 in Form einer Schraubenfeder aufgenommen ist. Durch die Bohrung 9 im Schaltbolzen 2 wird eine Verkürzung der Baueinheit und somit eine Raum sparende Anordnung erreicht. Die Feder 10 ist vorgespannt und stützt sich am Schaltbolzen 2 und am Arretiergehäuse 8 ab.

Der Schaft 3 ist innerhalb der Feder 10 geführt, wobei die Feder 10 sich einerseits in der Bohrung 9 des Schaltbolzens 2 und andererseits an dem Boden 15 des Arretiergehäuses 8 abstützt. Der Boden 15 des Arretiergehäuses 8 weist eine in diesem Fall kreisförmige Ausnehmung 23 auf, durch die der Schaft 3 in eine Aufnahme 24 ragt, so dass er durch das Arretiergehäuse 8 gleitgelagert ist bzw. geführt wird. Endseitig ist der Schaft 3 verjüngt und nimmt einen ringförmigen Permanentmagneten als Signalgeber 16 auf.

Die Aufnahme 24 ist im Wesentlichen kreiszylindrisch ausgebildet und weist etwa in ihrer Mitte einen ringförmigen Absatz 31 auf. Der Absatz 31 hält einerseits eine Hülse 26 und kann länger als erforderlich ausgebildet sein, um optional eine maximale Einpresstiefe vorzugeben. Die Hülse 26 ist an dem von der Schaltarretierung 25 abgewandten Ende mit einem umlaufenden Bord 32 versehen, der die Hülse sicher in dem Gehäuse fixiert, wobei anstatt des Bordes 32 auch mehrere Lappen treten können.

Das Arretiergehäuse 8 ist in drei Abschnitte 11, 12, 13 unterteilt, wobei der erste und der dritte Abschnitt 13, 11 zylindrisch ausgebildet sind. Der zweite Abschnitt 12 ist als Dopplung 14 ausgebildet. Es ist auch denkbar, dass das Arretiergehäuse 8 eine einfache, zylindrische Blechhülse ist.

Die Sensorik besteht zumindest aus einem Signalgeber 16 und einem als Sensor 17 bezeichneten Signalempfänger. Optional weist die Sensorik nicht weiter beschriebene elektronische Bauelemente auf, welche eine Auswerteelektronik bilden. Die Auswerteelektronik kann dabei in dem Gehäuse 19, in dem auch der Sensor angeordnet ist, montiert oder vergossen sein. Das Gehäuse 19 ist aus Kunststoff oder aus Metall. Die Sensorik weist weiterhin eine Schnittstelle zum Fahrzeug in Form eines Steckkontakts 20 mit einem Druckstift 21 auf. Die Sensorik ist als berührungslose Sensorik ausgeführt. Der Sensor 17 ist ein Hall-Sensor, und der Signalgeber 16 ist ein Permanentmagnet. Die Signalerzeugung verläuft somit berührungslos. Damit eignet sich dieses Verfahren vor allem für eine Erkennung des geschalteten Gangs. Da keine elektrischen Kontakte geschlossen werden, ist ein derartiger Sensor nicht geeignet, direkt große Ströme zu übertragen. Gleichwohl kann das Signal dazu genutzt werden, um beispielsweise eine Rückfahrleuchte in einer separaten Einheit zu schalten.

Sowohl das Gehäuse 19 als auch die Schaltarretierung 25 sind separat voneinander herstellbar und transportierbar, ohne dass funktionswesentliche Bauteile verschmutzen können.

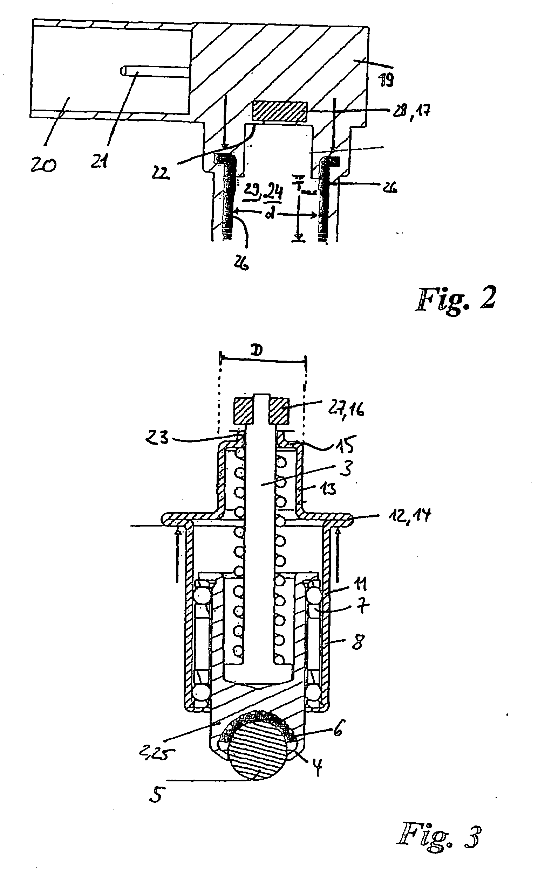

Das Verfahren zur Herstellung einer Sensorschalteinheit nach Anspruch 10 ist unmittelbar aus den Figuren 2 und 3, welche die Einzelteile vor ihrem Verpressen und Figur 1, die das fertige Verfahrensprodukt darstellt, zu erkennen. Eine Schaltarretierung 25 (Figur 3) wird mit ihrem ersten Abschnitt 13, der einen Außendurchmesser D aufweist, auf eine Aufnahme 24 eines Gehäuses 19 (Figur 2) zentriert. In der Aufnahme 24 ist eine verformbare Hülse 26 angeordnet, die einen Innendurchmesser d aufweist, der kleiner ist als der Außendurchmesser D. Ein Presswerkzeug wirkt in Pfeilrichtung (Figur 3) auf die Dopplung 12 (Figur 3), während das Gehäuse 19 relativ dazu fest gehalten wird. Gleichzeitig wird das Signal des Sensors 17 erfasst. Überschreitet das Signal einen vordefinierten Sollwert oder wird eine bestimmte vorgegebene, aufgrund der Art des Verpressens erwartete Signalfolge detektiert, so wird das Verpressen beendet. Aus den Figuren 1 und 2 geht hervor, dass die jeweiligen Einpresstiefen T im Mittel um einen Wert E, die mittlere Einpresstiefe der Schaltarretierung 25, schwanken, welche stets kleiner als die maximale Einpresstiefe Tₘₐₓ.

### Bezugszeichenliste

- 1: Sensorschalteinheit
- 2: Schaltbolzen
- 3: Schaft
- 4: Kalotte
- 5: Kugel
- 6: Wälzkugeln
- 7: Wälzlager
- 8: Arretiergehäuse
- 9: Bohrung
- 10: Feder
- 11: dritter Abschnitt
- 12: zweiter Abschnitt
- 13: erster Abschnitt
- 14: Dopplung
- 15: Arretierboden
- 16: Signalgeber
- 17: Sensor
- 18: Ablaufbahn
- 19: Gehäuse
- 20: Steckkontakt
- 21: Druckstift
- 22: Boden
- 23: Ausnehmung
- 24: Aufnahme
- 25: Schaltarretierung
- 26: Hülse
- 27: erstes Sensorikelement
- 28: zweites Sensorikelement
- 29: Sackloch
- 30: Rand
- 31: Absatz
- 32: Bord
- Tₘₐₓ: max. Einpresstiefe
- E: mittlere Einpresstiefe
- d: Innendurchmesser
- D: Außendurchmesser

## Patentansprüche

1. Sensorschalteinheit (1) zur Bestimmung von Stellungen wenigstens eines Getriebebauteils, bestehend aus
- einer Schaltarretierung (25) zum Arretieren von Getriebeschaltpositionen, wobei die Schaltarretierung (25) ein Arretiergehäuse (8) und einen Schaltbolzen (2) aufweist und der Schaltbolzen (2) hubbeweglich in dem Arretiergehäuse (8) gelagert ist und gegen das Getriebebauteil vorspannbar ist,
- einer Sensorik mit einem Signalgeber (16) als erstem Sensorikelement (27) und einem Sensor (17) als zweitem Sensorikelement (28)
- und einem Gehäuse (19) mit einer Aufnahme (24) für die Schaltarretierung (25),
**dadurch gekennzeichnet,**
- **dass** ein Sensorikelement (27, 28) an dem Schaltbolzen (2) oder an einem mit dem Schaltbolzen (2) in Wirkverbindung stehenden Schaft (3) und das andere Sensorikelement (28, 27) an dem Gehäuse (19) angeordnet ist und
- **dass** die Schaltarretierung (25) in der Aufnahme (24) des Gehäuses (19) in einer Einpresstiefe E verpresst ist, die geringer als die maximal mögliche Einpresstiefe Tₘₐₓ ist, wobei die Aufnahme (24) und die Schaltarretierung (25) derart ausgebildet sind, dass die Schaltarretierung (25) bei unterschiedlichen Einpresstiefen T sicher gehalten ist.

2. Sensorschalteinheit nach Anspruch 1, **dadurch gekennzeichnet, dass** in der Aufnahme (24) zwischen Schaltarretierung (25) und Gehäuse (19) eine Hülse (26) angeordnet ist.

3. Sensorschalteinheit nach Anspruch 1, **dadurch gekennzeichnet, dass** das Gehäuse (19) aus Kunststoff oder aus Metall ausgebildet ist.

4. Sensorschalteinheit nach Anspruch 1, **dadurch gekennzeichnet, dass** der Außendurchmesser D der Schaltarretierung (25) geringfügig größer ist als der Innendurchmesser d der Aufnahme (24).

5. Sensorschalteinheit nach Anspruch 1, **dadurch gekennzeichnet, dass** die Aufnahme (24) konisch ausgebildet ist und die Schaltarretierung (25) zumindest teilweise ein konisches, zur Aufnahme (24) komplementäres Arretiergehäuse (8) aufweist.

6. Sensorschalteinheit nach Anspruch 1, **dadurch gekennzeichnet, dass** der Sensor (17) am Gehäuse (19) und der Signalgeber (16) an der Schaltarretierung (25) angeordnet sind.

7. Sensorschalteinheit (1) nach Anspruch 6, **dadurch gekennzeichnet, dass** die Aufnahme (24) als ein Sackloch (29) mit einem Boden (22) ausgebildet ist, wobei das Sackloch (29) eine größere axiale Tiefe als die größtmögliche Einpresstiefe Tₘₐₓ aufweist, und dass der Sensor (17) im Boden (22) angeordnet ist.

8. Sensorschalteinheit (1) nach Anspruch 7, **dadurch gekennzeichnet, dass** die Schaltarretierung (25) ein Arretiergehäuse (8) aufweist, das einen umlaufenden Rand (30) als Angriffsfläche für ein Presswerkzeug aufweist.

9. Sensorschalteinheit nach Anspruch 1, **dadurch gekennzeichnet, dass** die Schaltarretierung (25) einen Schaft (3) aufweist, der mit dem Schaltbolzen (2) in Wirkverbindung steht und an dem der Signalgeber (16) endseitig angeordnet ist.

10. Verfahren zum Verpressen einer Schaltarretierung (25) in eine Aufnahme (24) eines Gehäuses (19), wobei das eine Bauteil (19, 25) einen Signalgeber (16) und das andere einen Sensor (17) zum Detektieren eines Signals des Signalgebers (16) aufweist, wobei durch den Signalgeber (16) in dem Sensor (17) ein Signal in Abhängigkeit von Position und/oder Geschwindigkeit der Schaltarretierung (25) erzeugbar ist, wobei
während des Verpressens ein Kalibrieren erfolgt, indem beim Verpressen das Signal ausgewertet wird und das Verpressen aufgrund dieser Auswertung des Signals gesteuert oder geregelt wird.

11. Verfahren nach Anspruch 10, wobei bei Erreichen eines vorbestimmten Schwellwerts des Signals das Verpressen beendet wird.

12. Verfahren nach Anspruch 10, wobei die Schaltarretierung (25) so lange verpresst wird, bis eine erste Signaländerung detektiert wird.

13. Verfahren nach Anspruch 10, wobei der Signalgeber (16) als ein Magnet und der Sensor (17) als ein Hall-Sensor ausgebildet sind.

14. Verfahren nach Anspruch 10 mit einer Schaltarretierung (25), deren Arretiergehäuse (8) aus Blech und in Druckrichtung gesehen rotations-symmetrisch ausgebildet ist, wobei sich an einen Arretierboden (15) ein erster, zylindrischer Abschnitt (13) dann ein zweiter Abschnitt (12) und dann ein dritter, zylindrischer Abschnitt (11) abschließen, wobei
der Durchmesser des dritten Abschnitts (11) größer als der des ersten Abschnitts (13) ist und dass allein der erste Abschnitt (13) zumindest teilweise verpresst wird.

15. Verfahren nach Anspruch 14, wobei der zweite Abschnitt als Dopplung (14) ausgebildet ist und dass das Presswerkzeug auf die Dopplung (14) wirkt.

16. Verfahren nach Anspruch 10, wobei vor dem Verpressen eine Hülse (26) in die Aufnahme (24) eingebracht wird.

## Claims

1. Sensor shift unit (1) for determining positions of at least one transmission component, comprising
- a selector interlock (25) for interlocking gearshift positions, the selector interlock (25) having an interlock housing (8) and a shift pin (2), and the shift pin (2) being movably mounted in the interlock housing (8) in a lifting manner and allowing itself to be prestressed against the transmission component,
- a sensor system with a signal transmitter (16) as a first sensor system element (27) and a sensor (17) as a second sensor system element (28)
- and a housing (19) with a receptacle (24) for the selector interlock (25),
**characterized**
- **in that** one sensor system element (27, 28) is arranged on the shift pin (2) or on a shank (3) in operative connection with the shift pin (2) and the other sensor system element (28, 27) is arranged on the housing (19) and
- **in that** the selector interlock (25) is pressed into the receptacle (24) of the housing (19) to an insertion depth E that is less than the maximum possible insertion depth Tₘₐₓ, the receptacle (24) and the selector interlock (25) being formed in such a way that the selector interlock (25) is securely held at various insertion depths T.

2. Sensor shift unit according to Claim 1, **characterized in that** a sleeve (26) is arranged in the receptacle (24) between the selector interlock (25) and the housing (19).

3. Sensor shift unit according to Claim 1, **characterized in that** the housing (19) is formed from plastic or from metal.

4. Sensor shift unit according to Claim 1, **characterized in that** the outside diameter D of the selector interlock (25) is slightly greater than the inside diameter d of the receptacle (24)

5. Sensor shift unit according to Claim 1, **characterized in that** the receptacle (24) is conically formed and the selector interlock (25) at least partially has a conical interlock housing (8) complementing the receptacle (24).

6. Sensor shift unit according to Claim 1, **characterized in that** the sensor (17) is arranged on the housing (19) and the signal transmitter (16) is arranged on the selector interlock (25).

7. Sensor shift unit (1) according to Claim 6, **characterized in that** the receptacle (24) is formed as a blind hole (29) with a base (22), the blind hole (29) having a greater axial depth than the greatest possible insertion depth Tₘₐₓ, and **in that** the sensor (17) is arranged in the base (22).

8. Sensor shift unit (1) according to Claim 7, **characterized in that** the selector interlock (25) has an interlock housing (8), which has a peripheral edge (30) as an engagement surface for a pressing tool.

9. Sensor shift unit according to Claim 1, **characterized in that** the selector interlock (25) has a shank (3), which is in operative connection with the shift pin (2) and on the end of which the signal transmitter (16) is arranged.

10. Method for pressing a selector interlock (25) into a receptacle (24) of a housing (19), the one component (19, 25) having a signal transmitter (16) and the other having a sensor (17) for detecting a signal of the signal transmitter (16), it being possible for a signal to be generated by the signal transmitter (16) in the sensor (17) in dependence on the position and/or speed of the selector interlock (25), a calibration being performed during the pressing, in that during the pressing the signal is evaluated and the pressing undergoes open-loop or closed-loop control on the basis of this evaluation of the signal.

11. Method according to Claim 10, the pressing being ended when a predetermined threshold value of the signal is reached.

12. Method according to Claim 10, the selector interlock (25) being pressed until a first change in the signal is detected.

13. Method according to Claim 10, the signal transmitter (16) being formed as a magnet and the sensor (17) being formed as a Hall sensor.

14. Method according to Claim 10 with a selector interlock (25), the interlock housing (8) of which is formed from sheet metal and so as to be rotationally symmetrical as seen from the direction in which pressure is applied, an interlock base (15) being adjoined by a first, cylindrical portion (13), then a second portion (12) and then a third, cylindrical portion (11), the diameter of the third portion (11) being greater than that of the first portion (13), and the first portion (13) alone being at least partially pressed.

15. Method according to Claim 14, the second portion been formed as a lap (14) and the pressing tool acting on the lap (14).

16. Method according to Claim 10, a sleeve (26) being introduced into the receptacle (24) before the pressing.

## Revendications

1. Unité de commutation à détecteur (1) pour déterminer les positions d'au moins un composant d'engrenage, composée de
- un dispositif de blocage de commutation (25) pour bloquer les positions de commutation de l'engrenage, le dispositif de blocage de commutation (25) présentant un boîtier de blocage (8) et un goujon de commutation (2) et le goujon de commutation (2) étant logé avec mobilité dans le boîtier de blocage (8) et pouvant être précontraint contre le composant d'engrenage,
- un dispositif de détection comprenant un codeur de signal (16) comme premier élément de détection (27) et un capteur (17) comme deuxième élément de détection (28),
- et un boîtier (19) comprenant un logement (24) pour le dispositif de blocage de commutation (25), **caractérisé en ce**
- **qu'**un élément de détection (27, 28) est disposé sur le goujon de commutation (2) ou sur une tige (3) qui se trouve en liaison active avec le goujon de commutation (2) et l'autre élément de détection (28, 27) est disposé sur le boîtier (19) et
- **que** le dispositif de blocage de commutation (25) est enfoncé dans le logement (24) du boîtier (19) à une profondeur d'enfoncement E qui est inférieure à la profondeur d'enfoncement maximale possible Tₘₐₓ, le logement (24) et le dispositif de blocage de commutation (25) étant configurés de telle sorte que le dispositif de blocage de commutation (25) est maintenu avec assurance à des profondeurs d'enfoncement T différentes.

2. Unité de commutation à détecteur selon la revendication 1, **caractérisée en ce qu'**un manchon (26) est disposé dans le logement (24) entre le dispositif de blocage de commutation (25) et le boîtier (19).

3. Unité de commutation à détecteur selon la revendication 1, **caractérisée en ce que** le boîtier (19) est réalisé en matière plastique ou en métal.

4. Unité de commutation à détecteur selon la revendication 1, **caractérisée en ce que** le diamètre extérieur D du dispositif de blocage de commutation (25) est légèrement supérieur au diamètre intérieur d du logement (24).

5. Unité de commutation à détecteur selon la revendication 1, **caractérisée en ce que** le logement (24) est de forme conique et le dispositif de blocage de commutation (25) présente au moins partiellement un boîtier de blocage (8) conique complémentaire au logement (24).

6. Unité de commutation à détecteur selon la revendication 1, **caractérisée en ce que** le capteur (17) est monté sur le boîtier (19) et le codeur de signal (16) sur le dispositif de blocage de commutation (25).

7. Unité de commutation à détecteur (1) selon la revendication 6, **caractérisée en ce que** le logement (24) est réalisé sous la forme d'un trou borgne (29) avec un fond (22), le trou borgne (29) présentant une profondeur axiale plus grande que la profondeur d'enfoncement maximale possible Tₘₐₓ et **en ce que** le capteur (17) est disposé dans le fond (22).

8. Unité de commutation à détecteur (1) selon la revendication 7, **caractérisée en ce que** le dispositif de blocage de commutation (25) présente un boîtier de blocage (8) qui présente un bord (30) périphérique faisant office de surface de prise pour un outil de pressage.

9. Unité de commutation à détecteur selon la revendication 1, **caractérisée en ce que** le dispositif de blocage de commutation (25) présente une tige (3) qui est en liaison active avec le goujon de commutation (2) et sur laquelle est disposé, du côté de l'extrémité, le codeur de signal (16).

10. Procédé pour enfoncer un dispositif de blocage de commutation (25) dans un logement (24) d'un boîtier (19), l'un des composants (19, 25) présentant un codeur de signal (16) et l'autre un capteur (17) pour détecter un signal du codeur de signal (16), un signal pouvant être généré par le codeur de signal (16) dans le capteur (17) en fonction de la position et/ou de la vitesse du dispositif de blocage de commutation (25), selon lequel un calibrage est effectué pendant l'enfoncement par le fait que le signal est interprété lors de l'enfoncement et que l'enfoncement est commandé ou régulé en fonction de cette interprétation du signal.

11. Procédé selon la revendication 10, selon lequel l'enfoncement prend fin lorsqu'une valeur de seuil prédéfinie du signal est atteinte.

12. Procédé selon la revendication 10, selon lequel le dispositif de blocage de commutation (25) est enfoncé jusqu'à la détection d'une première modification du signal.

13. Procédé selon la revendication 10, selon lequel le codeur de signal (16) est réalisé sous la forme d'un aimant et le capteur (17) sous la forme d'un capteur à effet Hall.

14. Procédé selon la revendication 10 avec un dispositif de blocage de commutation (25) dont le boîtier de blocage (8) est réalisé en tôle et, vu dans le sens de la pression, avec symétrie rotationnelle, une première section cylindrique (13), puis une deuxième section (12) et ensuite une troisième section cylindrique (11) venant se raccorder à un fond de blocage (15), selon lequel le diamètre de la troisième section (11) est supérieur à celui de la première section (13) et seule la première section (13) est au moins partiellement enfoncée.

15. Procédé selon la revendication 14, selon lequel la deuxième section est réalisée sous la forme d'une doublure (14) et l'outil de pressage agit sur la doublure (14).

16. Procédé selon la revendication 10, selon lequel un manchon (26) est introduit dans le logement (24) avant l'enfoncement.
